# EUROPEAN PATENT APPLICATION

(11) **EP 1 357 211 A1**
(43) Date of publication of application: **29.10.2003**
(21) Application number: 02715736.1
(22) Date of filing: 11.01.2002
(51) Int. Cl.: D03D 3/08, D03D 1/00

(54) **SPIRAL WOVEN FABRIC AND HIGH-SPEED ROTATING BODY USING IT**

(30) Priority: 12.01.2001 JP 2001005383; 12.01.2001 JP 2001005392
(71) Applicant: Sumitomo Electric Industries, Ltd., Osaka-shi, Osaka 541-0041 (JP); Chubu Electric Power Co., Inc., Nagoya-shi, Aichi 461-0006 (JP)
(72) Inventor: NARUMI, Kiyoyuki, c/o Sumitomo Electric Ind., Ltd, Nagoya-shi, Aichi 461-0005 (JP); UENO, Keiji, c/o Sumitomo Electric Ind., Ltd, Nagoya-shi, Aichi 461-0005 (JP); NAGAYA, Shigeo, c/o Chubu Electric Power Co., Inc., Nagoya-shi, Aichi 459-8522 (JP); KASHIMA, Naoji, c/o Chubu Electric Power Co., Inc., Nagoya-shi, Aichi 459-8522 (JP); DEMURA, Tatsutaro, Kanazawa-shi, Ishikawa 920-0855 (JP)
(74) Representative: Cross, Rupert Edward Blount
(86) International application number: JP0200164
(87) International publication number: WO02055773

(57) **Abstract**

The aim is to uniformly reinforce a matrix material and improve the resistance to centrifugal force.

A helical fabric S is formed of helical warp yarns and radial weft yarns alternately passing over and under the warp yarns, and heat-melt yarns provided radially outside the radially outermost warp yarn so as to alternately pass over and under the weft yarns. The helical fabric is used as a reinforcement. Since the heat-melt yarns are fused to the weft yarns, they prevent the warp yarns from slipping off the weft yarns. Thus, it is possible to cut off the portions of the weft yarns protruding radially outwardly from the heat-melt yarns. Since the radially outer ends of the weft yarns can be cut off so as to be arranged on a circle, the fabric is positioned precisely concentric with the axis of the mold.

## Description

### Technical Field to which the Invention Belongs

This invention relates to a helical fabric used to manufacture a high-speed rotary element in the shape of a disk or a cylinder. This type of rotary element is advantageously used as a flywheel in a generator, a rotary grinder or the like.

### Prior Art

In manufacturing high-strength, high-speed rotary elements using a synthetic resin as a matrix, a helical fabric is used as a reinforcement. Such a helical fabric includes warp yarns that extend continuously in the circumferential direction of the fabric. The warp yarns effectively increase the resistance to centrifugal force of the rotary element. Such a high-speed rotary element is typically used as a flywheel for storing electric power, a brake disk or a rotary grinder.

A typical such helical fabric comprises warp yarns and weft yarns both made of high-strength fiber such as carbon fiber or alamide fiber, the warp yarns being bent helically and the weft yarns extending radially to the warp yarns and the warp yarns and the weft yarns being woven into a helical sheet. Since the warp yarns and weft yarns are formed of high-strength fiber, it is difficult to fold the radially outer ends of the weft yarns. Thus, in order to prevent the warp yarns from slipping off the weft yarns at the radially outer peripheral portion, the radially outer ends of the weft yarns have to protrude by a sufficiently long distance from the radially outermost warp yarn.

### Problem To be Solved

When such a helical fabric is placed in a mold and a matrix is filled, such protruding ends of the weft yarns inevitably contact the inner wall of the mold. Thus, it is difficult to place the fabric in alignment with the axis of the mold. If the fabric used as a reinforcement is positioned eccentric relative to the matrix, it may be eccentric relative to the rotation axis of the rotary element.

In view of such a problem, an object of the invention is to provide a helical fabric which makes it possible to minimize the length of the portion of the weft yarns protruding from the outer periphery and to position easily in the mold by fusing a heat-melt yarn arranged outside of the outermost warp yarn to the weft yarns and cutting the weft yarns short.

Another object of the invention is to provide a high-speed rotary element which uses the helical fabric as a reinforcement, thereby making it possible to position the reinforcement properly in the mold so as to be concentric with respect to the matrix.

### Means for Solving the Problem

According to the present invention, there is provided a helical fabric comprising warp yarns extending helically, weft yarns extending radially relative to the warp yarns, and alternately passing over and under the warp yarns, and a heat-melt yarn provided radially outside of and along radially outermost one of the warp yarns so as to alternately pass over and under the weft yarns, the heat-melt yarn being fused to the weft yarns, portions of the weft yarns protruding radially outwardly from the heat-melt yarn being cut to an even length.

From another aspect of the invention, there is provided a high-speed rotary element comprising a matrix material and a reinforcement for reinforcing the matrix material, and the above-described helical fabric is used as the reinforcement.

A second heat-melt yarn may be provided radially inside of the radially innermost warp yarn so as to alternately pass over and under the weft yarns. The second heat-melt yarn is fused to the weft yarns, and the portions of the weft yarns protruding radially inwardly from the second heat-melt yarn may be cut to an even length.

The helical fabric may further comprise a third heat-melt yarn provided inside of radially outermost warp yarn so as to alternately pass over and under the weft yarns and fused to the weft yarns.

The warp yarns may be arranged such that the radial pitch between any adjacent warp yarns will decrease from radially inside toward radially outside and that the fineness of the warp yarns increases from radially inside from radially outside.

### Effects

The heat-melt yarns provided radially outside of the radially outermost warp yarn are fused to the weft yarns and prevent the warp yarns from slipping off the weft yarns. Thus, the portions of the weft yarns protruding radially outwardly from the heat-melt yarns can be cut short. The weft yarns are inserted separately radially to the warp yarns and independently of each other.

If the helical fabric is used as a reinforcement, it is placed in position in a mold and a matrix material is charged into the mold. The reinforcement can be placed concentric relative to the matrix. Thus, the helical fabric can uniformly reinforce the entire rotary element.

The warp yarns and weft yarns for the helical fabric may be made of high-strength fiber such as a pitch or PAN carbon fiber, glass fiber, alamide fiber, SiC fiber, alumina fiber, silica fiber, boron fiber, potassium titanate fiber, zirconia fiber, silicon carbide fiber, polyacrylonitrile fiber, polyacrylate fiber, all-aromatic polyester fiber, ultra-high polymer polyethylene fiber, high-strength Vinylon fiber, high-strength acrylic fiber and metallic fiber. These fibers are used in the form of multi-filament yarns having a desire fineness, which are formed by binding many filaments of a desired size to a flat section having a width of several millimeters and a thickness of 0.1 to 0.4 mm. For example, if carbon fiber, glass fiber or alumina fiber is used, about 1000-36000 filaments each having a diameter of about 5-10 µm are bound together to form a warp yarn or weft yarn. If alamide fiber or the like is used, filaments each having a fineness of 1-5 denier are bound together to form a warp yarn or weft yarn of several thousand to several ten thousand denier.

The warp yarns and weft yarns may have the same fineness or have different fineness from each other, or may be made of the same material or different materials from each other. The fineness referred to herein means the size of the section of the warp yarn or weft yarn. The warp yarns arranged radially outside may have a greater specific elastic modulus and a greater specific strength than any radially inner warp yarn.

The matrix material is preferably a high-strength engineering plastic such as an epoxy resin, unsaturated polyester resin, phenolic resin, polyimide, polyamide, polycarbonate, polyacetal, polyphenylene ether, polyarylate, polyphenylene sulfide, polysulfone, polyether sulfone, polyetherether ketone, polyetherimide, polyamideimide or ethylene-vinyl alcohol copolymer. In order to improve mechanical strength, heat resistance, wear resistance, etc., fillers such as fiber, whisker or powder of organic compounds, inorganic substances, abrasive grains, ceramics or metals may be dispersed or mixed in the matrix or coated to the surface of the matrix.

The heat-melt yarns are fibers of thermoplastic resin that melts at a low temperature. Such plastics include engineering plastics such as polyamides including nylon 6, polyetherimide, polysulfone, polyetherether ketone and polyamideimide, and general-purpose plastic material such as polyethylene, polystyrene, polypropylene and polycarbonate.

The helical fabric may be formed by weaving the warp yarns and weft yarns into a desired weave such as plain weave, twill weave or satin weave. The helical fabric can be woven by means of any weft yarn inserting type of weaving machine including a rapier loom, a needle loom, and a fluid jet loom using air or water jet.

If the second heat-melt yarn is provided radially inside of the innermost warp yarn, the weft yarns are coupled together through the second heat-melt yarn at the inner protruding portion, thereby preventing the warp yarns at the radially inner side from slipping off the weft yarns.

The weft yarns to which the second heat-melt yarn is fused can be cut to an even length at a position inside of the second heat-melt so that the length of the portion protruding from the innermost end will be minimum. This lessens the possibility of interfering with the core of the mold in forming a cylindrical high-speed rotary member having an opening at the central axis.

By providing the third heat-melt yarn inside of the outmost warp yarn, it is possible to more effectively prevent the weft yarns at the outer periphery from becoming loose.

By arranging the warp yarns such that the radial pitch between the warp yarns increases from radially inside to radially outside, the density of warp yarns increases from radially inside to outside, thus compensating for reduction in density of the weft yarns. Thus, as a whole, the fabric has uniform Metsuke. Or it is possible to increase the Metsuke from radially inside to outside.

By increasing the fineness of the warp yarns from radially inside toward outside, it is possible to increase the density of the warp yarns from radially inside to outside and compensate for the decrease in the density of the weft yarns. This will give the same effect as by decreasing the radial pitch.

Also, for the weft yarns, yarns having higher strength and higher elasticity are used at radially outside than radially inside. This will give the same effect as by increasing the fineness of the yarn.

The second and third heat-melt yarns may be made of the same material as or a different material from the material of the heat-melt yarns provided at the outermost side.

### Brief Description of the Drawings

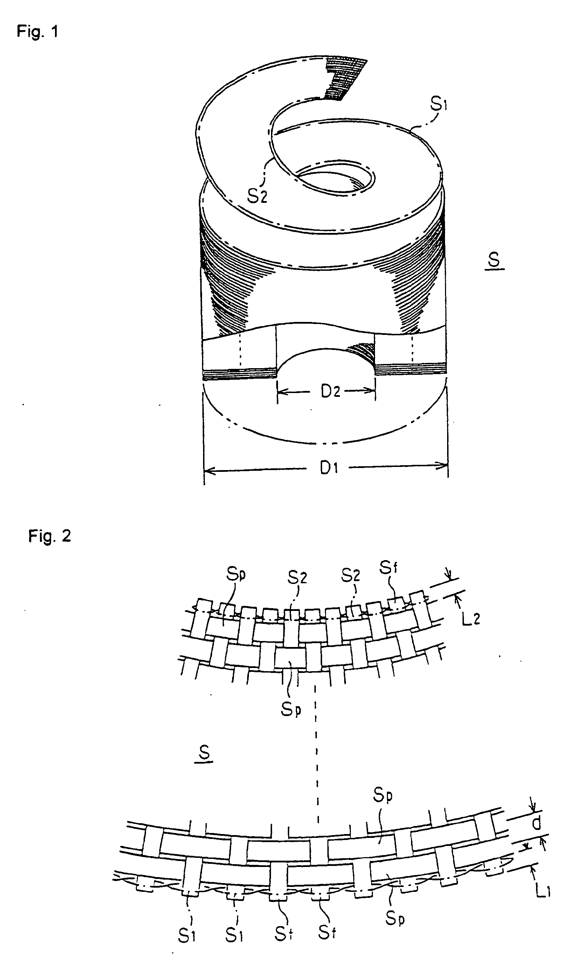

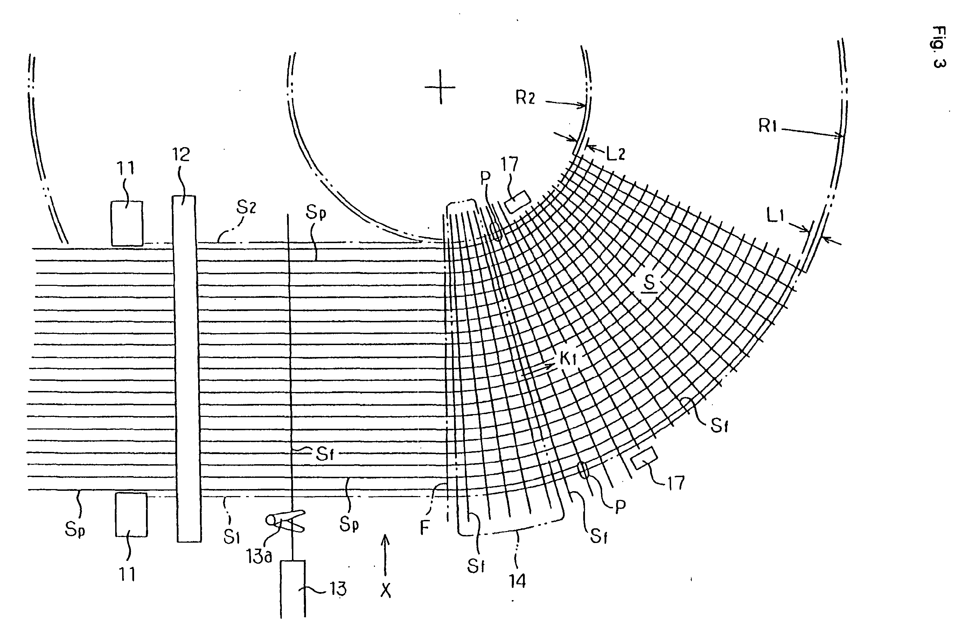

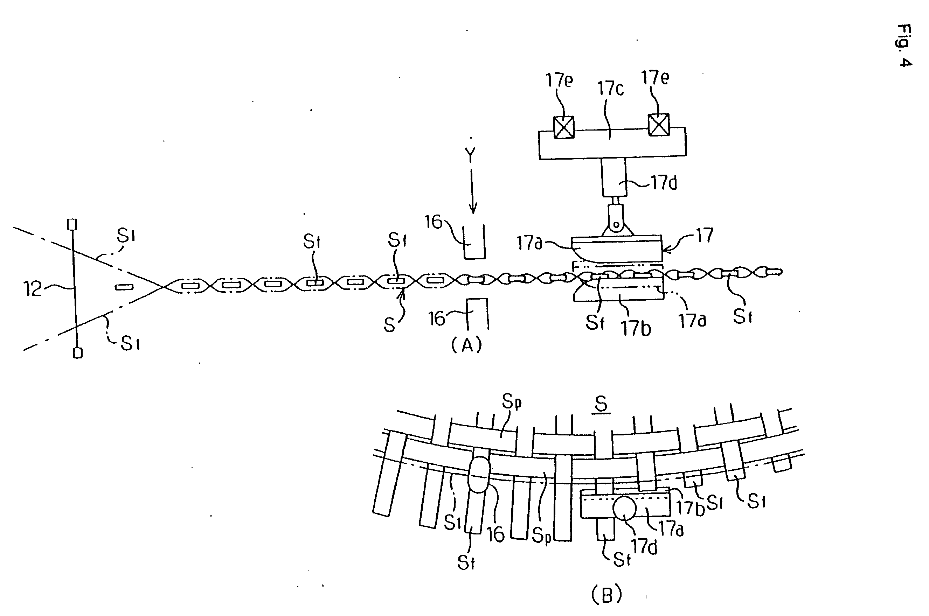

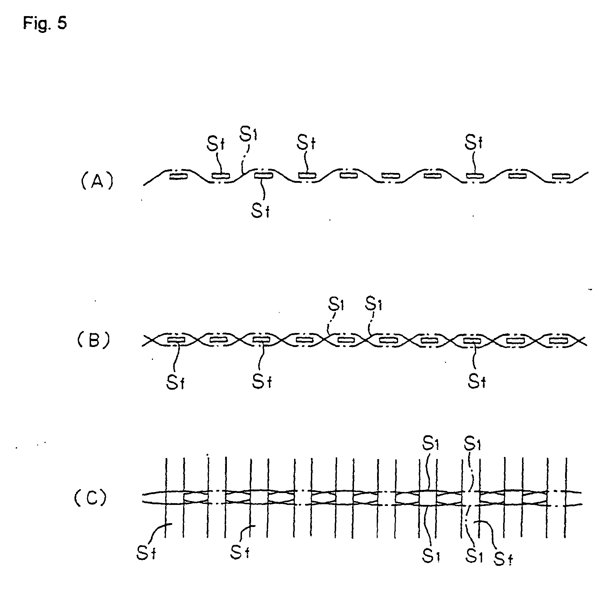

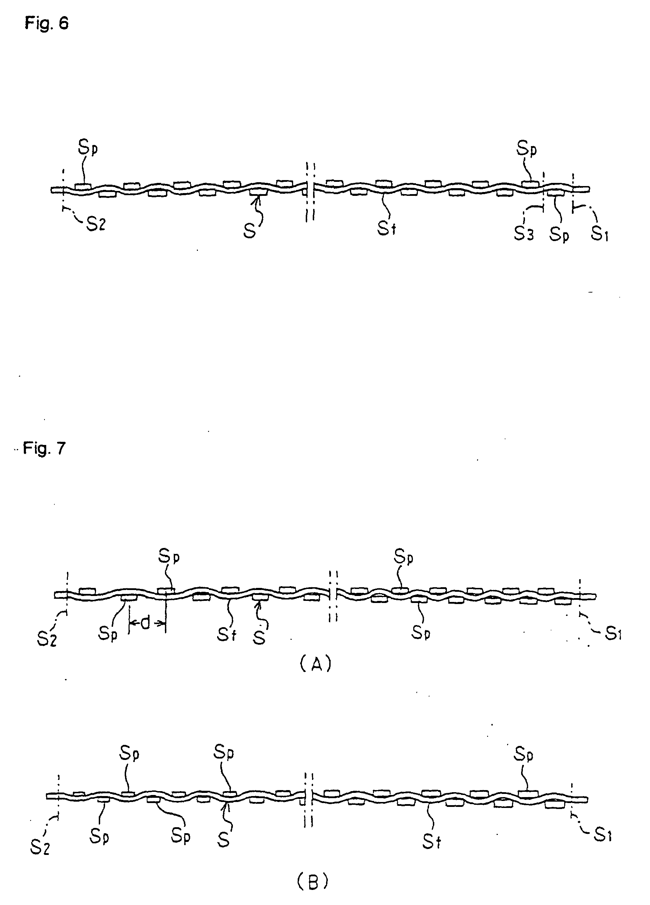

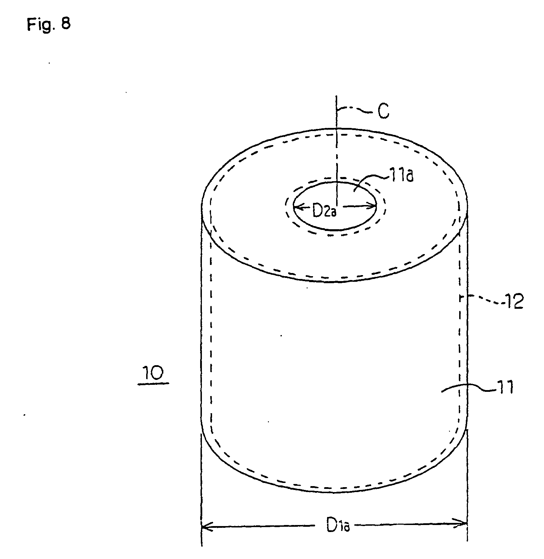

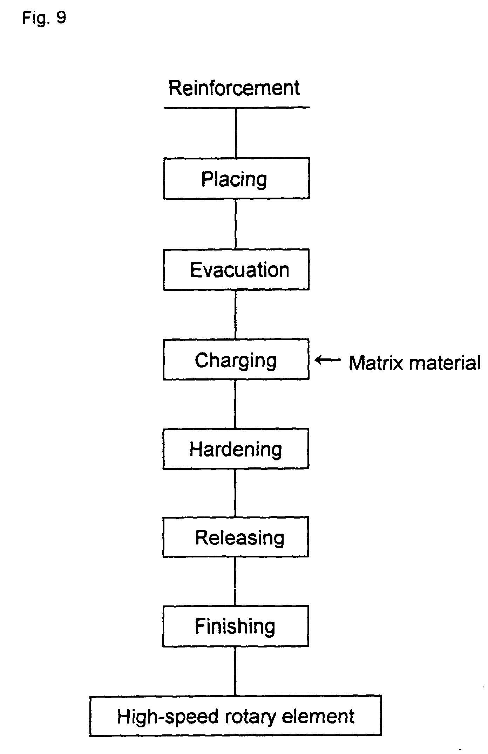

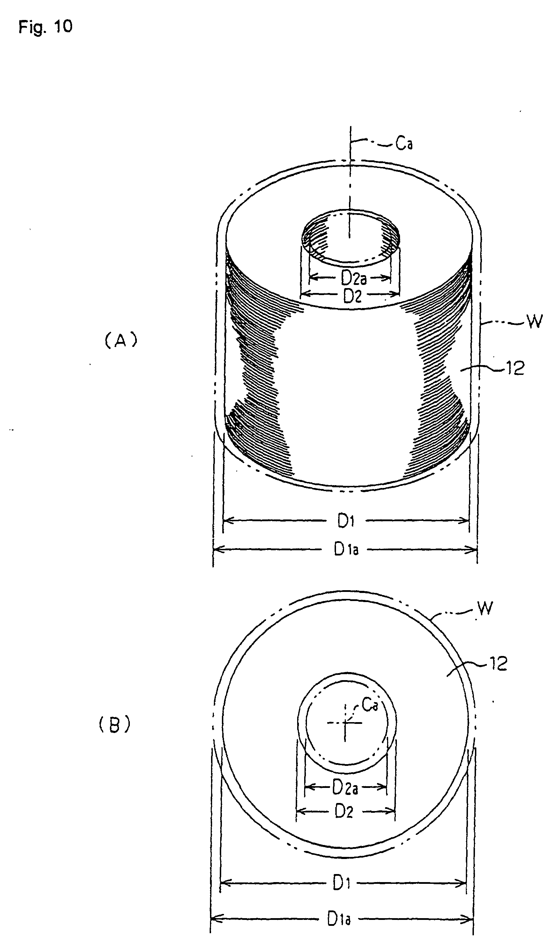

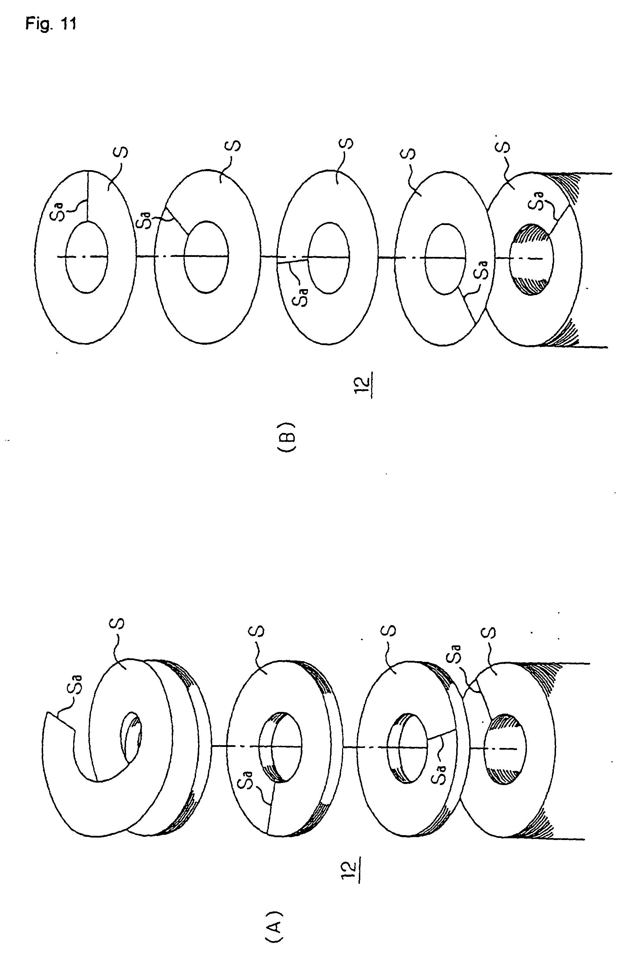

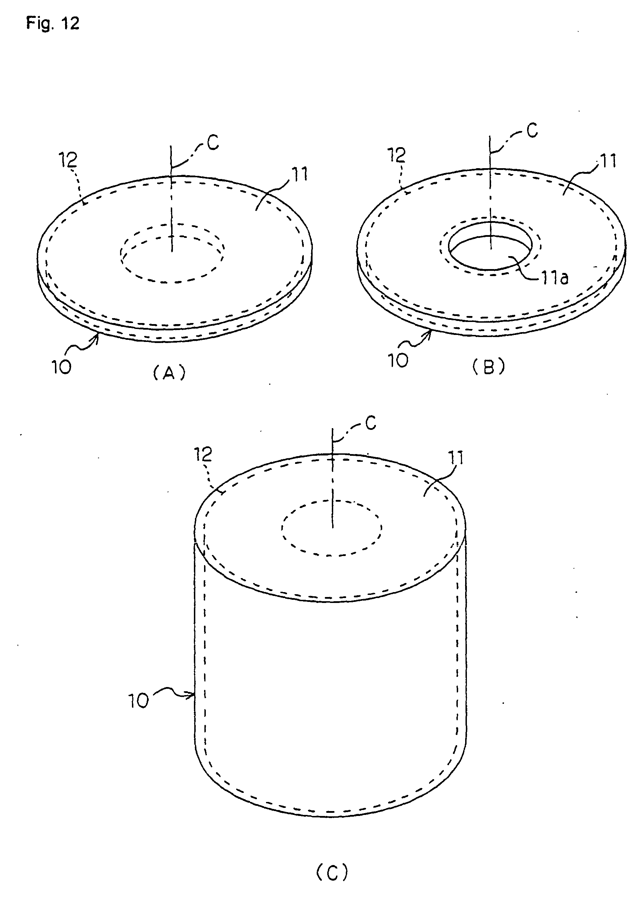

Fig. 1 is a perspective view of an entire helical fabric embodying the invention. Fig. 2 is a partial enlarged plan view of part of the fabric. Figs. 3 and Figs. 4 show how the fabric is formed. Fig. 5 are partial enlarged schematic views of another embodiment. Fig. 6 is a similar view of another embodiment. Fig. 7 is a similar view of another embodiment. Fig. 8 is a perspective view of a different helical fabric. Fig. 9 is a view showing the manufacturing steps. Fig. 10 shows how the rotary element of the invention is formed. Figs. 11 are partial exploded perspective view of different fabrics. Fig. 12 is a perspective view of different rotary elements.

### Embodiments of the Invention

Now referring to the drawings, the embodiments of the invention will be described.

The helical fabric S comprises helically arranged warp yarns Sp and radially arranged weft yarns Sf, the weft yarns passing alternately over and under the warp yarns, and two first heat-melt yarns S1 extend helically outside of the radially outermost warp yarn Sp, the yarns S1 passing alternately over and under the weft yarns Sf (Figs. 1 and 2). Radially inside of the radially innermost warp yarn Sp, two second heat-melt yarns S2 are provided passing alternately over and under the weft yarns Sf.

The helical fabric S is formed into a helical sheet having the outer diameter D1 and the inner diameter D2 by weaving the warp yarns Sp and the weft yarns Sf. The warp yarns Sp are arranged with uniform radial pitches d and helically bent. The weft yarns Sf radially extend relative to the warp yarns Sp. The radially inner edges and outer edges of the weft yarns Sf are cut to an even length radially outside and radially inside relative to the circles formed by the first heat-melt yarns S1 and the second heat-melt yarns S2, respectively, so that the weft yarns Sf extend radially outwardly and inwardly from the outermost and innermost warp yarns Sp by lengths L1 and L2, respectively.

The heat-melt yarns S1 are woven at the outermost portion of the helical fabric S passing over and under the weft yarns Sf. The yarns S1 and S2 are fused to the- weft yarns Sf by heating. On the other hand, the second heat-melt yarns S2 are woven at the innermost portion of the helical fabric S passing over and under the weft yarns Sf and are fused to the weft yarns.

The helical fabric S is woven by a weaving machine which includes yarn feeders 11, a reed 12, a weft yarn inserting device 13 and a fabric feeder 14 (Figs. 3 and 4). Figs. 4A and 4B are views as seen in the direction of arrow X of Fig. 3 and in the direction of arrow Y of Fig. 4A, respectively.

The warp yarns Sp are pulled out of an unillustrated creel or beam while applying a predetermined tension and are shed by means of a heald frame. The yarn feeders 11 are provided on both sides of the warp yarns Sp to feed a pair of heat-melt yarns S1 and a pair of heat-melt yarns S2, respectively. The weft yarn inserting device 13 inserts weft yarns Sf into the opening formed by the warp yarns Sp. In front of the weft yarn inserting device 13, a cutter 13a is provided to cut the rear end of each weft yarn Sf each time it is inserted. The reed 12 beats up the weft yarns into a cloth fell to weave into the helical fabric S. Preferably, the cloth fell extends perpendicular to the warp yarns Sp and radially of the helical fabric S.

The fabric feeder 14 is immediately downstream of the cloth fell F. It bends the warp yarns Sp with predetermined radii of curvature and also arranges the weft yarns Sf so as to extend radially, and feeds the helical fabric S thus formed in the direction shown by the arrow K1 of Fig. 3. The fabric S thus formed has an outer radius R1 = D1/2 and an inner radius R2 = D2/2. Downstream of the fabric feeder 14, hot air nozzles 16 are provided over and under the first heat-melt yarns S1 and the second heat-melt yarns S2 with their tips directed at melting points P to melt the yarns S1 and S2 in the fabric S by blowing hot air against the yarns S1 and S2.

Further downstream of the hot air nozzles 16, radially inner and outer cutter devices 17 are provided. Each of the cutter devices 17 includes a movable blade 17a and a stationary blade 17b. The movable blade 17a is moved toward and away from the lower stationary blade 17b (as shown in Fig. 4A by dotted line) at a high speed to cut the radially inner or outer ends of the weft yarns Sf. The movable blade 17 is driven by a cylinder 17d fixedly mounted to a slide base 17c, which is coupled to the stationary blade 17b through a coupling mechanism (not shown) so as to be slidable along guide rails 17e that extend in a radial direction of the fabric S.

The weaving machine sheds not only the warp yarn Sp but also the heat-melt yarns S1 and the second heat-melt yarns S2, inserts the weft yarn yarns Sf by means of the weft yarn inserting device 13, beats up the weft yarn yarns Sf into the cloth fell by the reel 12, and the fabric feeder 14 feeds the fabric thus weaved while bending it into a helical shape. Thus, a web of helical fabric S can be formed continuously.

The hot air nozzles 16 blow hot air against the heat-melt yarns S1 and S2 to melt them, thereby fusing them to the weft yarns Sf. The cutter devices 17 cut the radially inner ends and radially outer ends of the weft yarns Sf to radii of R1 and R2, respectively, at outside of the outermost warp yarn Sp and inside of the innermost warp yarn. The hot air nozzles 16 may be replaced with hot presses.

The heat-melt yarns S1 and S2 retain the weft yarns Sf and also prevent the radially outermost and radially innermost warp yarns Sp from moving relative to the weft yarns Sf and prevent them from breaking loose. This is because the heat-melt yarns S1 and S2 are fused to the weft yarns Sf at their radially inner and outer ends, thereby binding the weft yarns Sf and the yarns S1 and S2 together. Thus, the radially outer and inner ends of the weft yarns Sf protruding from the radially outermost and radially innermost warp yarns Sp can be cut short uniformly to minimum length L1 and L2.

At the outer periphery of the helical fabric S, a single heat-melt yarn S1 may be provided so as to pass over and under the weft yarns Sf (Fig. 5A) and two heat-melt yarn S1 may be provided (Figs. 5B, 5C). Fig. 5B shows an arrangement in which two heat-melt yarns S1 cross at points between the weft yarns Sf as in Fig. 4A whereas Fig. 5C shows an arrangement in which four heat-melt yarns S1 cross at points between the weft yarns Sf, two yarns forming one pair. The second heat-melt yarn S2 may be provided one, two or more as the heat-melt yarn S1 shown in Fig. 5. The second heat-melt yarn S2 may be omitted. In this case, the radially inner ends of the weft yarns Sf protruding radially inwardly from the radially innermost warp yarn may not be cut uniformly.

Also, a third heat-melt yarn S3 may be provided inside of and along the radially outermost warp yarn Sp so as to alternately pass over and under the weft yarns Sf. The third heat-melt yarn S3 prevents the warp yarns from slipping off the weft yarns in cooperation with the heat-melt yarn S1 at the outermost. The third heat-melt yarn S3 may be one, two or more. A fourth heat-melt yarn or yarns similar to the third heat-melt yarn S3 may be provided inside of and along the radially innermost warp yarn Sp.

As shown in Fig. 7A, the warp yarns Sp may be arranged such that the radial pitch d between any adjacent warp yarns Sp will decrease from radially inside toward radially outside. Also, as shown in Fig. 7B, the warp yarns Sp may have their fineness increasing from radially inside to radially outside. The arrangements of Figs. 7A and 7B compensate for reduction in density of the weft yarns Sf from radially inside of the fabric S toward outside.

Such a helical fabric S may be used as a reinforcement 22 for a matrix material 21 forming a high-speed rotary element 20 (Fig. 8). The rotary element 20 is integrally formed from a composite material comprising the matrix material 21 and the reinforcement 22.

The high-speed rotary element 20 is formed into a hollow cylindrical shape having an outer diameter D1a≧ D1 and an inner diameter D2a≦ D2≦ D1a. The matrix material 21 has a circular opening 21a around the axis center C and the reinforcement 22 is embedded concentrically with the matrix material 21 around the axis center C and laminated over the entire height of the matrix material 21. Thus the reinforcement 22 is capable of reinforcing the entire matrix material 21.

The rotary element 20 is integrally formed as described below (Figs. 9 and 10). Fig. 10B is a schematic plan view of Fig. 10A.

First, the helical fabric S as the reinforcement 22 is placed in a mold W with its turns stacked axially. Since the reinforcement 22 is formed to have predetermined outer diameter D1 and inner diameter D2, it can be placed in the mold W such that its axis is properly aligned with the axis Ca of the mold W. With the fabric thus placed in the mold, the mold W is closed, the interior of the mold is evacuated, and then the matrix material 21 is charged into the mold W. But instead, evacuation may be carried out simultaneously with the charging of the matrix material 21. The matrix material 21 infiltrates into the reinforcement 22, thus uniformly impregnating it. When the matrix material 21 hardens, the matrix material 21 and the reinforcement 22 are released from the mold W and its surface is finished. Now the high-speed rotary element 20 is complete.

The rotary element 20 thus manufactured is integrally formed from the matrix material 21 and the reinforcement 22.

The warp yarns Sp of the reinforcement 22, which continuously extend in the circumferential direction, increase the mechanical strength of the rotary element 20, particularly its radially outer portion, thereby increasing the resistance to centrifugal force while the rotary element 20 is rotating at a high speed.

### Other embodiments

The reinforcement 22 may be formed of a plurality of helical fabrics S having a suitable number of turns and stacked axially one on another (Fig. 11A). Also, the reinforcement 22 may be formed of a plurality of single-turn fabrics S that are axially stacked one on another (Fig. 11B). By charging the matrix material 21 every time one block consisting of a plurality of fabrics S is placed in the mold, it is possible to more uniformly impregnate the fabrics S with the matrix material 21. When such a plurality of fabrics S are stacked, care must be taken that no cut position Sa of each fabric S will axially align with the cut positions of any other fabrics S. This precaution is necessary because two or more cut positions that axially align with each other tend to unduly reduce the resistance to centrifugal force.

The rotary element 20 may be in the shape of a disk (Fig. 12A and Fig. 12B) or a column (Fig. 12C). Also, the rotary elements may have a central bore 21a (Fig. 12B) or have no central bore (Fig. 12A, 12C).

### Industrial Application

According to the present invention, the helical fabric comprises warp yarns extending helically, weft yarns extending radially relative to the warp yarns and alternately passing over and under the warp yarns, and a heat-melt yarn provided radially outside of and along radially outermost one of the warp yarns so as to alternately pass over and under the weft yarns. The heat-melt yarn fused to the weft yarns positively prevent the warp yarns from slipping off the weft yarns. Thus, it is possible to cut short the portions of the weft yarns protruding radially outwardly from the outermost warp yarn so that the outer ends of the weft yarns will protrude by a uniform minimum length. Such a reinforcement can be easily placed in a mold in exact alignment with the axis of the mold.

With the reinforcement placed in the mold, the matrix is charged into the mold and hardened to form the rotary member. Since the reinforcement is precisely positioned in a mold so as to be concentric in the matrix material, it uniformly reinforces the matrix material and increases the resistance to centrifugal force.

Since the matrix and the reinforcement are practically integral, the rotary element of the invention can be manufactured at a lower cost than rotary elements manufactured by such a conventional method as filament winding or multi-ring method while maintaining uniform quality.

## Claims

1. A helical fabric comprising warp yarns extending helically, weft yarns extending radially relative to said warp yarns and alternately passing over and under said warp yarns, and a heat-melt yarn provided radially outside of and along radially outermost one of said warp yarns so as to alternately pass over and under said weft yarns, said heat-melt yarn being fused to said weft yarns, portions of said weft yarns protruding radially outwardly from said heat-melt yarn being cut to an even length.

2. The helical fabric claimed in claim 1 further comprising a second heat-melt yarn provided radially inside of and along radially innermost one of said warp yarns so as to alternately pass over and under said weft yarns.

3. The helical fabric claimed in claim 2 wherein said second heat-melt yarn is fused to said weft yarns, and portions of said weft yarns protruding radially inwardly from said second heat-melt yarn are cut to an even length.

4. The helical fabric claimed in any of claims 1-3 further comprising a third heat-melt yarn provided radially inside of and along radially outermost one of said warp yarns so as to alternately pass over and under said weft yarns and fused to said weft yarns.

5. The helical fabric claimed in any of claims 1-4 wherein said warp yarns are arranged such that the radial pitch between any adjacent warp yarns decreases from radially inside toward radially outside.

6. The helical fabric claimed in any of claims 1-5 wherein the fineness of said warp yarns increases from radially inside toward radially outside.

7. A high-speed rotary element comprising a matrix material and a reinforcement for reinforcing said matrix material, said reinforcement being formed of a helical fabric, said helical fabric comprising warp yarns extending helically, weft yarns extending radially relative to said warp yarns, and alternately passing over and under said warp yarns, and a heat-melt yarn provided radially outside of and along radially outermost one of said warp yarns so as to alternately pass over and under said weft yarns, said heat-melt yarn being fused to said weft yarns, portions of said weft yarns protruding radially outwardly from said heat-melt yarn being cut to an even length.

8. The rotary element claimed in claim 7 wherein said helical fabric further comprises a second heat-melt yarn provided radially inside of and along radially innermost one of said warp yarns so as to alternately pass over and under said weft yarns.

9. The rotary element claimed in claim 8 wherein said second heat-melt yarn is fused to said weft yarns and portions of said weft yarns protruding radially inwardly from said second heat-melt yarn are cut to an even length.

10. The rotary element claimed in any of claims 7-9 wherein said helical fabric further comprises a third heat-melt yarn provided radially inside of and along radially outermost one of said warp yarns so as to alternately pass over and under said weft yarns and fused to said weft yarns.

11. The rotary element claimed in any of claims 7-10 wherein said warp yarns are arranged such that the radial pitch between any adjacent warp yarns decreases from radially inside toward radially outside.

12. The rotary element claimed in any of claims 7-11 wherein the fineness of said warp yarns increases from radially inside toward radially outside.
